Europäisches Patentamt

European Patent Office

Office européen des brevets

(19)

(11) Veröffentlichungsnummer: **0 092 739**
**A2**

(12) # EUROPÄISCHE PATENTANMELDUNG

(21) Anmeldenummer: 83103588.6

(22) Anmeldetag: 14.04.83

(51) Int. Cl.³: **C 08 J 9/10**
//C07C107/02

(30) Priorität: 28.04.82 DE 3215837

(43) Veröffentlichungstag der Anmeldung:
02.11.83 Patentblatt 83/44

(84) Benannte Vertragsstaaten:
AT BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Hurnik, Helmut
Bonner Strasse 5
D-5090 Leverkusen 3(DE)

(72) Erfinder: Finzenhagen, Manfred, Dr.
Roggendorfstrasse 59
D-5000 Köln 80(DE)

(72) Erfinder: Jeblick, Werner, Dr.
Walter-Flex-Strasse 30
D-5090 Leverkusen 1(DE)

(54) Treibmittelkombination auf Basis von Azodicarbonamid, deren Herstellung und Verwendung zur Verschäumung von Kunststoffen.

(57) Gegenstand der Erfindung sind neue Treibmittelkombinationen auf der Basis von Azodicarbonamid unter Zusatz von Metallverbindungen, deren Herstellung sowie Verwendung zur Herstellung von zelligen und porösen Artikeln wie Schaumstoffen und thermoplastischen Polymeren.

EP 0 092 739 A2

BAYER AKTIENGESELLSCHAFT    5090 Leverkusen, Bayerwerk

Zentralbereich
Patente, Marken und Lizenzen  Eck/Kü-c

Treibmittelkombination auf Basis von Azodicarbonamid, deren Herstellung und Verwendung zur Verschäumung von Kunststoffen

Gegenstand der Erfindung sind neue Treibmittelkombinationen auf der Basis von Azodicarbonamid unter Zusatz von Metallverbindungen, deren Herstellung sowie Verwendung zur Herstellung von zelligen und porösen Artikeln wie Schaumstoffen und thermoplastischen Polymeren.

Bekanntlich kann man verschäumte Produkte aus organischen polymeren Materialien durch Zersetzung eines in das Polymer eingearbeiteten oder auf das Kunststoffgranulat aufgetrommelten Treibmittels herstellen. Diese Treibmittel zersetzen sich kontrolliert oberhalb einer bestimmten Temperatur unter Abspaltung eines Treibgases und Bildung eines Rückstandes, welche im Schaum verbleiben. In der Literatur wurden Substanzen der verschiedensten Verbindungsklassen für diesen Zweck beschrieben, beispielsweise Azoverbindungen, Hydrazide, Semicarbazide, Triazole, Tetrazole, N-Nitrosoverbindungen, Benzoxazine u.a. (Kunststoffe 66 (1976) 10. S. 698 - 701).

Le A 21 628-EP

- 2 -

Amidderivate der Azodicarbonsäure erfüllen im allgemeinen diese Bedingungen. Insbesondere Azodicarbonamid eignet sich aufgrund seiner ausgezeichneten Stabilität, seiner hohen Zersetzungstemperatur, seiner günstigen Zersetzungscharakteristik und aufgrund des relativ großen Volumens der pro Gewichtseinheit abgespaltenen Gase. Zudem bestehen die abgespalteten Gase zum größten Teil aus Stickstoff und die Zersetzungsrückstände sind farb- und geruchslos.

Je nach dem zu verschäumenden Polymeren können dem Azodicarbonamid Zusätze beigemischt werden, welche beispielsweise die Zersetzungstemperatur senken oder die Porenstruktur und die Farbe des entstehenden Schaumes günstig beeinflussen.

Beispielsweise können als Zusätze verschiedene Zinksalze allein oder in Mischung mit anderen Schwermetallsalzen wie z.B. Blei-, Zinn-, Cadmiumsalzen usw. und besonders Chromverbindungen wie Chromaten oder Chromsalzen als sehr wirksam zur Herstellung von z.B. vernetzten Polyethylenschäumen, Schaumgummi oder Polyvinylchloridschäumen verwendet werden (z.B. DE-AS 1 936 098, DE-AS 2 653 748, EP-A 0 027 688).

Weiterhin ist bekannt, daß beispielsweise durch Zusatz von Magnesiumoxid die Verschäumung günstig beeinflußt werden kann (DE-AS 2 852 287, 2 351 515). Auch ist beispielsweise der Zusatz von Zinkverbindungen in Kombination mit Al-Sn-, B- und Si-Verbindungen zum Treibmittel beschrieben worden (Jp-A 40-70 931 (74-70 931)).

Le A 21 628

Es wurde nun gefunden, daß man Zusätze wie z.B. Chromate oder Chromverbindungen in Kombination mit den bekannten Zink- oder anderen Schwermetallsalzen verzichten kann, wenn man dem Azodicarbonamid Metallverbindungen wie Bor-, Molybdän-, Wolfram- und/oder Titanverbindungen einzeln oder in Mischung miteinander zusetzt.

Erfindungsgemäß werden Metallverbindungen dem Treibmittelgemisch zugesetzt. Es werden Verbindungen des Bors, Molybdäns, Wolframs und Titans verwendet. Sie können einzeln oder in Mischung miteinander verwendet werden.

Als Metallverbindungen seien beispielsweise genannt:

Borsäure, Bortrioxid, Natriumborat, Calciumborat, Perborate wie z.B. Natriumperborat, Molybdänoxid, Natriummolybdat, Ammoniummolybdat, Wolframoxid, Wolframsäure, Natriumwolframat, Calciumwolframat, Ammoniumwolframat, Titandioxid, Natriumtitanat, Calciumtitanat, Titansulfat, Titanoxidsulfat, Titanperoxidsulfat, Titanchlorid.

Es werden 0,0001 - 2 Gew.-%, bezogen auf eingesetztes Azodicarbonamid, bevorzugt 0,01 - 1 Gew.-%, besonders bevorzugt 0,2 bis 0,6 Gew.-% Metallverbindung zugegeben. Die mittlere Korngröße des verwendeten Azodicarbonamids kann bei Einsatz der erfindungsgemäßen Zusätze im Bereich von 3 bis 55 µ variieren.

Die erfindungsgemäße Treibmittelkombination, bestehend aus Azodicarbonamid (ADC) und Metallverbindung kann beispielsweise bei der Verschäumung von Polymeren wie

Le A 21 628

0092739

- 4 -

thermoplastischen Polymeren Verwendung finden. Vorzugsweise wird sie bei der Verschäumung thermoplastischer Polymerer verwendet die im Temperaturbereich von 140 - 350°C verarbeitet werden, wobei die Verarbeitungstemperatur vom jeweils eingesetzten Thermoplasten abhängt. Als Thermoplasten seien beispielsweise genannt;

Polyvinylchlorid, Polyethylen, Polypropylen, Copolymerisate aus Vinylchlorid (VC)/Vinylacetat(VAC), VC/Ethylenvinylacetat (EVAC), Ethylen (E)/VC, Propylen/VC, E/VAC, Ethylen/Propylen, Polystyrole, Polyamide, Polysulfone, Polyethylen-Polypropylen (PETP), Polybutylen-terephthalat (PBT), Polyphenylenoxid (PPO), Polyacrylate, Kautschuk, Kunststoffe auf Basis von Celluloseestern, Acrylnitril-Butadien-Styrol-Polymere (ABS), Mischungen aus Polysulfon und Styrol-Acrylnitril- oder ABS-Polymeren, Mischungen aus PVC und ABS-Polymeren bzw. Acrylnitril-Polymeren, polymere Mischungen und Gemische der genannten Polymeren.

Die erfindungsgemäße Treibmittelkombination wird vorzugsweise bei der Herstellung von vernetzten Polyolefinschäumen, wobei Polyethylen besonders bevorzugt ist, eingesetzt.

Die erfindungsgemäße Treibmittelkombination wird dem zu verschäumenden Polymeren in üblichen Mengen zugesetzt. Vorzugsweise enthält das zu verarbeitende Polymer 0,1 bis 35 Gew.-%, besonders bevorzugt 1 - 20 Gew.-% erfindungsgemäße Treibmittelkombination, die aus Azodicarbonamid (ADC) und einer oder mehreren Metallverbindungen besteht.

Le A 21 628

Die damit hergestellten Polymerschäume sind im allgemeinen farb- und geruchslos, zeigen ein sehr feines, gleichmäßiges Porenbild bei niedrigem Raumgewicht und haben eine glatte und farblose Oberfläche. Ein weiterer Vorteil der erfindungsgemäßen Treibmittelkombination ist darin zu sehen, daß die Verschäumung beschleunigt abläuft. Besonders bei hohen Produktionsgeschwindigkeiten wird dieser Fortschritt sichtbar, da hier in kürzerer Zeit das gewünschte Raumgewicht des jeweiligen Schaumes erreicht wird. Durch Verwendung der erfindungsgemäßen Treibmittelkombination wird die Wirtschaftlichkeit der Schaumherstellung verbessert und eine höhere Raum-Zeit-Ausbeute erreicht.

Die Herstellung der erfindungsgemäßen Treibmittelkombination, bestehend aus Azodicarbonamid und Metallverbindung kann in jeder Phase der Herstellung des Azodicarbonamids erfolgen, z.B. vor der Oxidation des Hydrazodicarbonamids zum Azodicarbonamid mit einem der üblichen Oxidationsmittel wie Chlor, Brom, Jod, Wasserstoffperoxid, Natriumchlorat etc., während der Oxidation und nach der Oxidation. Es ist ebenfalls möglich, die Stoffe bei der Isolierung durch ein gängiges Filteraggregat wie z.B. Drucknutsche, Drehfilter, Kastennutsche, Filterpresse etc. beim Waschen des Feststoffes und nach dem Waschen zuzusetzen. Die Beaufschlagung kann auch vor dem Trocknen in einem der üblichen Förder- oder Mischaggregate, während des Trockenvorganges und nach dem Trocknen in einem allgemein üblichen Misch- oder Mahlaggregat erfolgen. Die genannten Komponenten können einzeln oder in einer Lösung vereinigt zugesetzt werden. Wenn sie einzeln zugesetzt

Le A 21 628

- 6 -

werden, ist es möglich sie als Feststoff, Paste, Flüssigkeit oder Gas zum Azodicarbonamid zu geben. Das kann in
feinverteilter Form wie z.B. als Nebel, Rauch, Tröpfchen
erfolgen oder als kompakte Masse. Durch geeignete Maßnahmen wird erreicht, daß das Material gleichmäßig auf
der Oberfläche des Azodicarbonamids verteilt ist.

Die zu verschäumenden Kunststoffe können nach Bedarf und
Anwendungsgebiet beispielsweise mit Additiven wie Füllstoffen, Pigmenten, Flammschutzmitteln, Weichmachern,
Thermostabilisatoren, Peroxiden, Alterungsschutzmitteln,
Vernetzungs- und Vulkanisiermitteln versetzt werden.

Le A 21 628

Beispiel 1

In einer Rührapparatur werden 300 g (2,54 Mol) Hydrazodicarbonamid in 1.200 ml Wasser vorgelegt. Dann werden
3 g Molybdäntrioxid zugesetzt und die Suspension mit
Chlor oxidiert. Nach 3 Stunden ist die Oxydation des
Hydrazodicarbonamids bei einem Chlorverbrauch von 249 g
beendet. Der gelbe Feststoff wird auf der Nutsche abfiltriert, mit Wasser gewaschen und im Vakuumtrockenschrank getrocknet.

Ausbeute : 284 g (96,3 % bez. auf Hydrazodicarbonamid (HDC)

Anteil Molybdän im ADC : 0,45 %

∅-Korn ADC (μ) : 32

Beispiel 2

Bei sonst gleichen Bedinungen werden statt Molybdäntrioxid 3,0 g Borsäure vorgelegt. Nach Reaktionszeit werden
248 g Chlor verbraucht. 3 Stunden 50°.

Ausbeute : 280 g ≙94,9 % bezogen auf HDC

Anteil Bor in ADC : 0,0075 %

∅ - Korn ADC (μ) : 29

Beispiel 3

Analog wurde die Reaktion statt mit Molybdäntrioxid mit
3 g Titandioxid durchgeführt. Chlorverbrauch 241 g, Zeit
4 Stunden.

Le A 21 628

- 8 -

| Ausbeute | : | 290 g ≙ 98,3 % bezogen auf HDC |
| Anteil Titan in ADC | : | 0,7 % |
| ∅ - Korn (µ) | : | 25 |

### Beispiel 4

Bei einer analogen Reaktion wurden als Metallverbindung 3 g Wolframtrixoid eingesetzt. Reaktionszeit 4 Stunden, Chlorverbrauch 253 g.

| Ausbeute | : | 283 g ≙ 95,9 % bezogen auf HDC |
| Anteil Wolfram | : | 1,6 % |
| ∅ - Korn ADC (µ) | : | 33 |

### Beispiel 5

In einer Rührapparatur wurden vorgelegt

$$
\begin{array}{rl}
1,200 \text{ ml} & \text{Wasser} \\
300 \text{ g} & \text{Hydrazodicarbonamid} \\
3 \text{ g} & \text{Titandioxid}
\end{array}
$$

Der Ansatz wird mit einem Chlorverbrauch von 241 g oxidiert.

| Ausbeute | : | 280 g ≙ 94,9 % bezogen auf HDC |
| Anteil Titan in ADC | : | 0,7 % |
| ∅ - Korn (µ) | : | 12 |

Le A 21 628

Beispiel 6

222 g feuchtes ADC werden mit einer Lösung von 0,2 g Borsäure in 200 ml Wasser versetzt und gleichmäßig vermischt. Die Suspension wird vom Wasser befreit. Ausbeute ca. 200 g trockenes Produkt.

∅ - Korn ADC ($\mu$) : 15,5.

Beispiel 7

Wie Beispiel 10 mit einem ADC-Produkt der mittleren Korngröße von 27 $\mu$ und mit 0,2 Borsäure in 200 ml Wasser.

Beispiel 8

Wie Beispiel 10, aber das ADC wird mit einer Suspension von 1 g Wolframsäure in 200 ml Wasser behandelt, wobei durch das Eindampfen eine gleichmäßige Verteilung erzielt wird.

∅ - Korn ADC ($\mu$) : 15,5.

Le A 21 628

## Patentansprüche

1) Treibmittelkombination auf der Basis von Azodicarbonamid (ADC), dadurch gekennzeichnet, daß das
Azodicarbonamid mit einer oder mehreren Metallverbindungen des Bors, Molybdäns, Wolframs und/oder
Titans dotiert wird.

2) Verfahren zur Herstellung der Treibmittelkombination nach Anspruch 1, dadurch gekennzeichnet, daß
die Herstellung der Treibmittelkombination in jeder Phase der Herstellung des Azodicarbonamids erfolgen kann.

3) Verwendung von Treibmittelkombinationen nach
Anspruch 1, zur Herstellung von Kunststoffschäumen.

Le A 21 628